# EUROPÄISCHE PATENTANMELDUNG

(11) **EP 3 968 489 A1**
(43) Veröffentlichungstag der Anmeldung: **16.03.2022**
(21) Anmeldenummer: 20195812.1
(22) Anmeldetag: 11.09.2020
(51) Int. Cl.: H02J 7/00, H01M 50/20, H02J 7/36

(54) **BATTERIEMODUL**

(71) Anmelder: ads-tec Energy GmbH, 72622 Nürtingen (DE)
(72) Erfinder: SPEIDEL, Thomas, 71706 Markgröningen (DE)
(74) Vertreter: Karzel, Philipp

(57) **Zusammenfassung**

Die Erfindung betrifft ein Batteriemodul mit einer Mehrzahl von Batteriezellen (2). Jede Batteriezelle (2) weist einen Einzelspannungswert auf. Das Batteriemodul (1) weist einen Ausgangsspannungswert auf. Eine Verschaltung (11, 12, 13) der Batteriezellen (2) ist so ausgeführt, dass jede Batteriezelle (2) einer Gruppe (3) zugeordnet ist, wobei jede Gruppe (3) gleich viele Batteriezellen (2) enthält. Die Batteriezellen (2) einer Gruppe (3) sind parallel geschaltet. Die Gruppen (3) sind in Reihe geschaltet. Es sind verschiedene Verschaltungen (11, 12, 13) zu in Reihe geschalteten Gruppen (3) möglich. Das Batteriemodul (1) umfasst insgesamt genau 144 miteinander verschaltete Batteriezellen (2).

## Beschreibung

Die Erfindung betrifft ein Batteriemodul nach dem Oberbegriff des Anspruchs 1 und ein Verfahren nach dem Oberbegriff des Anspruchs 14.

Aus der DE 10 2016 207 572 A1 ist ein Batteriemodul mit einer Mehrzahl von Batteriezellen bekannt, deren Zellkontakte über Zellverbinder zum Aufbau einer Modulspannung variabel miteinander verschaltbar sind.

Oft ist eine bestimmte Ausgangs- oder Modulspannung erforderlich. Um eine niedrigere als die maximale Modulspannung zur Verfugung zu stellen, wird in DE 10 2016 207 572 A1 die Spannung nicht an allen in Reihe geschalteten Batteriezellen abgegriffen. Hierbei sind zeitweise viele Batteriezellen überhaupt nicht im Einsatz.

Der Erfindung liegt die Aufgabe zugrunde, ein gattungsgemäßes Batteriemodul derart weiterzubilden, dass verschiedene Modulspannungen jeweils unter Ausnutzung aller Batteriezellen des Batteriemoduls zur Verfügung gestellt werden können.

Diese Aufgabe wird durch ein Batteriemodul mit den Merkmalen des Anspruchs 1 gelöst.

Eine weitere Aufgabe der Erfindung liegt darin, ein Verfahren zur Herstellung eines Batteriemoduls anzugeben, mit dem verschiedene Modulspannungen unter Ausnutzung aller Batteriezellen des Batteriemoduls erzielt werden können.

Diese Aufgabe wird durch ein Verfahren mit den Merkmalen des Anspruchs 14 gelöst.

Bezüglich des Batteriemoduls sieht die Erfindung vor, dass das Batteriemodul insgesamt genau 144 miteinander verschaltete Batteriezellen umfasst. Eine Verschaltung der Batteriezellen ist so ausgeführt, dass jede Batteriezelle einer Gruppe zugeordnet ist. Jede Gruppe enthält gleich viele Batteriezellen. Jede Gruppe enthält eine Batterieanzahl an Batteriezellen. Dadurch ergibt sich ein einfacher Aufbau der Verschaltung. Die Batteriezellen einer Gruppe sind parallel geschaltet. Die Gruppen sind in Reihe geschaltet. Das Batteriemodul weist eine Gruppenanzahl an Gruppen auf. Bei baugleichen Batteriezellen, die jeweils vergleichbare Spannungswerte aufweisen, entladen sich die in Reihe geschalteten Gruppen in vergleichbaren Zeiten, weil jede Gruppe gleich viele Batteriezellen enthält. Es sind verschiedene Verschaltungen zu in Reihe geschalteten Gruppen möglich.

Dadurch, dass insgesamt genau 144 Batteriezellen vorgesehen sind, können die Batteriezellen so verschaltet werden, dass sehr viele unterschiedliche Ausgangsspannungen des Batteriemoduls erreicht werden können. Der Erfindung liegt die Erkenntnis zugrunde, dass die Zahl 144 besonders viele Teiler aufweist. Bei einer Gesamtbatterieanzahl von 144 in dem Batteriemodul sind trotz der Randbedingung, dass jede Gruppe gleich viele Batteriezellen enthalten muss, sehr viele Kombinationen von Batterieanzahlen und Gruppenanzahlen möglich. Dabei wird jeweils jede einzelne Batteriezelle des Batteriemoduls genutzt.

Vorteilhaft liefert das Batteriemodul in Abhängigkeit der Verschaltung unterschiedliche Ausgangsspannungswerte. Dadurch kann das Batteriemodul mit jeweils demselben räumlichen Aufbau bezüglich der Anordnung der Batteriezellen hergestellt werden und dennoch durch eine unterschiedliche Verschaltung der Batteriezellen miteinander verschiedene Ausgangsspannungen liefern. Viele elektrisch verschiedene Batteriemodule können basierend auf demselben Aufbau bezüglich der räumlichen Anordnung der Batteriezellen hergestellt werden. Dies erspart Produktionskosten und erhöht die Flexibilität.

Vorteilhaft sind insgesamt genau 15 verschiedene Verschaltungen der 144 Batteriezellen zu in Reihe geschalteten Gruppen möglich. Vorteilhaft können durch die verschiedenen Verschaltungen genau 15 verschiedene Ausgangsspannungen erzeugt werden. Dadurch können bei bezüglich der Anordnung der Batteriezellen räumlich unverändertem Aufbau des Batteriemoduls 15 verschiedene Ausgangsspannungen erreicht werden.

Zweckmäßig sind sämtliche miteinander verschaltete Batteriezellen des Batteriemoduls baugleich. Aus den Einzelspannungswerten sämtlicher miteinander verschalteter Batteriezellen ergibt sich ein Spannungsmittelwert aller Batteriezellen. Insbesondere weichen die Einzelspannungswerte sämtlicher miteinander verschalteter Batteriezellen des Batteriemoduls um weniger als 10%, insbesondere um weniger als 5% von dem Spannungsmittelwert aller Batteriezellen ab.

Vorteilhaft ist die Verschaltung der Batteriezellen so ausführbar, dass der Ausgangsspannungswert vom Einfachen bis zum 144fachen des Spannungsmittelwerts aller Batteriezellen beträgt. Dadurch kann mit dem Batteriemodul ein großer Bereich an Ausgangsspannungswerten erzeugt werden.

Zweckmäßig entspricht der Ausgangsspannungswert dem Produkt aus dem Spannungsmittel aller Batteriezellen und 1, 2, 3, 4, 6, 8, 9, 12, 16, 18, 24, 36, 48, 72 oder 144.

Vorteilhaft beträgt die Batterieanzahl an Batteriezellen einer Gruppe 1, 2, 3, 4, 6, 8, 9, 12, 16, 18, 24, 36, 48, 72 oder 144. Insbesondere umfasst eine Gruppe genau eine Batterieanzahl an Batteriezellen. Zweckmäßig beträgt die Gruppenanzahl an Gruppen 1, 2, 3, 4, 6, 8, 9, 12, 16, 18, 24, 36, 48, 72 oder 144. Insbesondere sind die miteinander verschalteten Batteriezellen in genau eine Gruppenanzahl eingeteilt.

Zweckmäßig ergibt das Produkt aus Batterieanzahl und Gruppenanzahl 144.

Vorteilhaft weist das Batteriemodul einen Batteriezellenträger auf. Insbesondere sind die Batteriezellen unabhängig von den verschiedenen Verschaltungen räumlich unverändert in dem Batteriezellenträger angeordnet. Auch bei anderer Wahl der Schaltung bleibt die räumliche Anordnung der Batteriezellen in dem Batteriezellenträger gleich.

In vorteilhafter Weiterbildung der Erfindung weist das Batteriemodul Kontaktbahnen auf. Insbesondere ist die Verschaltung der Batteriezellen über die Kontaktbahnen realisiert. Die Kontaktbahnen können auf einem Kontaktträger angeordnet sein. Es können auch zwei Kontaktträger vorgesehen sind. Der Pluspol einer Batteriezelle ist dann dem einen Kontaktträger zugewandt und der Minuspol derselben Batteriezelle ist dem anderen Kontaktträger zugewandt.

Zweckmäßig sind alle Batteriezellen des Batteriemoduls miteinander verschaltet. Dadurch werden keine Ressourcen verschwendet und das gesamte Leistungspotenzial des Batteriemoduls wird abgerufen.

In vorteilhafter Weiterbildung der Erfindung ist vorgesehen, dass die Pluspole von 72 Batteriezellen in eine Polrichtung weisen und dass die Pluspole der anderen 72 Batteriezellen entgegen der Polrichtung weisen. Dadurch können die verschiedenen Gruppen von Batteriezellen auf einfache Weise in Reihe geschaltet werden. Hierzu kann ein Pluspol einer Batteriezelle, der in Polrichtung weist, mit einem Minuspol einer anderen Batteriezelle, der ebenfalls in Polrichtung weist, verschaltet werden. Hierbei muss eine Kontaktbahn nicht in Polrichtung oder entgegen der Polrichtung entlang einer Batteriezelle geführt werden.

Zweckmäßig sind die Batteriezellen Rundzellen.

Vorteilhaft betragen die Einzelspannungswerte sämtlicher miteinander verschalteter Batteriezellen des Batteriemoduls jeweils von 2 V bis 5 V, insbesondere von 3 V bis 4 V. Bei Batteriezellen mit solchen Einzelspannungswerten ergibt sich bei einem Batteriemodul mit 144 Batteriezellen ein Batteriemodul mit einer günstigen Baugröße. Bei Batteriezellen mit solchen Einzelspannungswerten ergibt sich bei einem Batteriemodul mit 144 Batteriezellen ein Batteriemodul mit einem günstigen Energiegehalt. Insbesondere beträgt der Ausgangsspannungswert von 2 V bis 720 V, bevorzugt von 3 V bis 576 V.

Nach dem erfindungsgemäßen Verfahren zur Herstellung eines Batteriemoduls mit einer Mehrzahl von Batteriezellen, wobei jede Batteriezelle einen Einzelspannungswert aufweist und wobei das Batteriemodul einen Ausgangsspannungswert aufweist, ist vorgesehen, dass die Batteriezellen derart elektrisch miteinander verschaltet werden, dass jede Batteriezelle einer Gruppe zugeordnet ist. Jede Gruppe enthält gleich viele Batteriezellen. Die Batteriezellen einer Gruppe sind parallel geschaltet. Die Gruppen sind in Reihe geschaltet. Das Batteriemodul umfasst insgesamt genau 144 Batteriezellen, die miteinander verschaltet werden. Dadurch kann das Batteriemodul bezüglich der räumlichen Anordnung der Batteriezellen immer gleich hergestellt werden. Dennoch können durch unterschiedliche Verschaltungen der einzelnen Batteriezellen sehr viele verschiedene Ausgangsspannungswerte erreicht werden. Dadurch können bei der Herstellung des Batteriemoduls Kosten eingespart werden. Batteriemodule mit sehr vielen verschiedenen Ausgangsspannungen können auf Basis desselben Aufbaus des Batteriemoduls bezüglich der räumlichen Anordnung der Batteriezellen hergestellt werden.

Insbesondere sind bei räumlich unveränderter Anordnung der Batteriezellen durch unterschiedliche Verschaltung der Batteriezellen miteinander verschiedene Ausgangsspannungswerte des Batteriemoduls erzeugbar.

Vorteilhaft können die Batteriezellen derart elektrisch miteinander verschaltet werden, dass insgesamt genau 15 verschiedene Ausgangsspannungswerte erzeugbar sind.

Ausführungsbeispiele der Erfindung werden im Folgenden anhand der Zeichnung erläutert. Es zeigen:
- Fig. 1a: eine perspektivische Darstellung eines Batteriezellenträgers eines Batteriemoduls mit Batteriezellen,
- Fig. 1b: eine schematische Seitenansicht eines Batteriemoduls mit dem Batteriezellenträger aus Fig. 1,
- Fig. 2: eine schematische Darstellung der räumlichen Anordnung von 144 Batteriezellen eines Batteriemoduls in 12 Reihen und 12 Spalten,
- Fig. 3: eine schematische Darstellung eines Kontaktträgers eines Batteriemoduls mit Kontaktbahnen,
- Fig. 4: eine schematische Darstellung der Batteriezellen aus Fig. 2 und des Kontaktträgers aus Fig. 3 bei Kontakt der Kontaktbahnen des Kontaktträgers zu den Batteriezellen,
- Fig. 5: eine schematische Darstellung eines weiteren Kontaktträgers und der Unterseite der Batteriezellen aus Fig. 2 bei Kontakt der weiteren Kontaktbahnen des weiteren Kontaktträgers zu der Unterseite der Batteriezellen,
- Fig. 6: ein schematisches Schaltbild einer Verschaltung der Batteriezellen des Batteriemoduls nach Fig. 2 mit 12 in Reihe geschaltete Gruppen und mit jeweils 12 parallel geschalteten Batteriezellen einer Gruppe,
- Fig. 7: ein schematisches Schaltbild einer Verschaltung der Batteriezellen des Batteriemoduls nach Fig. 2 mit 24 in Reihe geschalteten Gruppen und mit jeweils 6 parallel geschalteten Batteriezellen einer Gruppe und
- Fig. 8: ein schematisches Schaltbild einer Verschaltung der Batteriezellen des Batteriemoduls nach Fig. 2 mit 144 in Reihe geschalteten Gruppen und mit jeweils einer Batteriezelle in einer Gruppe.

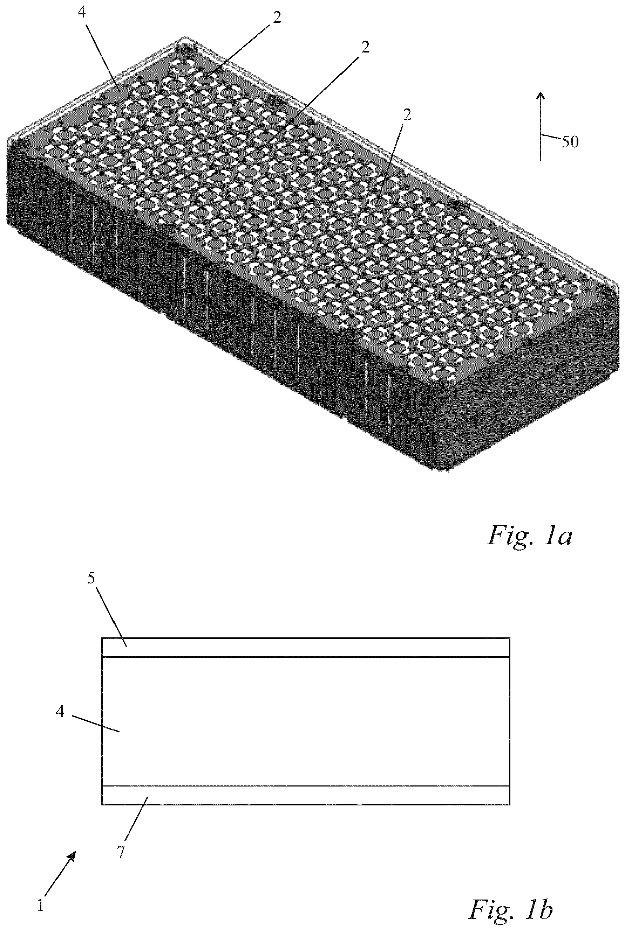

Fig. 1a zeigt einen Batteriezellenträger 4 eines Batteriemoduls 1. Der Batteriezellenträger 4 trägt Batteriezellen 2. In dem Batteriezellenträger 4 sind genau 144 Batteriezellen 2 angeordnet. Die Batteriezellen 2 sind nebeneinander angeordnet. In den Ausführungsbeispielen liegen die elektrischen Pole aller Batteriezellen 2 in genau zwei Ebenen. Es kann auch vorgesehen sein, dass die elektrischen Pole aller Batteriezellen 2 in genau einer Ebene liegen.

Fig. 1b zeigt eine schematische Seitenansicht eines Batteriemoduls 1. Das Batteriemodul 1 umfasst den Batterieträger 4 aus Fig. 1a, einen Kontaktträger 5 und einen weiteren Kontaktträger 7. Der Batterieträger 4 ist zwischen dem Kontaktträger 5 und dem weiteren Kontaktträger 7 angeordnet.

Der Batteriezellenträger 4 und die Batteriezellen 2 bilden die Basisform für Batteriemodule 1 mit verschiedenen Ausgangsspannungswerten. Die verschiedenen Ausgangsspannungswerte der Batteriemodule 1 werden durch unterschiedliche Verschaltung der einzelnen Batteriezellen 2 miteinander erreicht. Die räumliche Anordnung der Batteriezellen 2 in dem Batteriezellenträger 4 bleibt hierbei unverändert. Sämtliche miteinander verschaltete Batteriezellen 2 des Batteriemoduls 1 sind baugleich. Die Einzelspannungen sämtlicher miteinander verschalteter Batteriezellen 2 des Batteriemoduls 1 weichen jeweils um weniger als 10%, insbesondere um weniger als 5%, bevorzugt um weniger als 2% von einem Spannungsmittelwert aller Batteriezellen 2 ab. Der Spannungsmittelwert der Batteriezellen 2 ist der Mittelwert der Einzelspannungswerte der 144 Batteriezellen 2. Die Einzelspannungswerte sämtlicher miteinander verschalteter Batteriezellen 2 des Batteriemoduls 1 betragen jeweils von 2 V bis 5 V, insbesondere von 3 V bis 4 V.

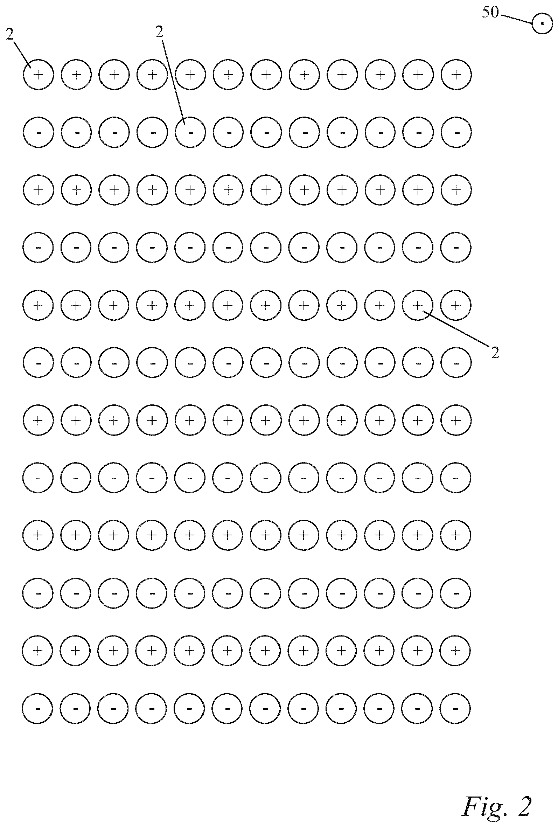

Fig. 2 zeigt eine schematische Darstellung einer Anordnung von Batteriezellen 2 in einem nicht dargestellten Batteriezellenträger. Die Batteriezellen 2 sind in 12 Reihen und in 12 Spalten angeordnet. Es kann jedoch auch jede andere beliebige Anordnung der Batteriezellen vorgesehen sein. Bevorzugt sind die Batteriezellen 2 in 36 versetzt zueinander angeordneten 4er-Reihen angeordnet, wie in Fig. 1a dargestellt. Die Batteriezellen 2 sind in Fig. 1a in vier Spalten und 36 Reihen angeordnet. In einer Spalte sind benachbarte Batteriezellen 2 jeweils leicht versetzt zueinander angeordnet. Die Breite einer Spalte ist etwas größer als die Breite einer Batteriezelle 2. Fig. 2 dient der einfacheren Darstellung des Prinzips der Erfindung. Grundlegend ist hierbei, dass die räumliche Anordnung der Batteriezellen 2 unabhängig von ihrer jeweiligen Verschaltung unverändert bleibt.

Fig. 2 zeigt eine Draufsicht von oben auf die Batteriezellen 2 bzw. auf das Batteriemodul 1 oder den Batterieträger 4. In den Ausführungsbeispielen sind die Batteriezellen 2 Rundzellen.

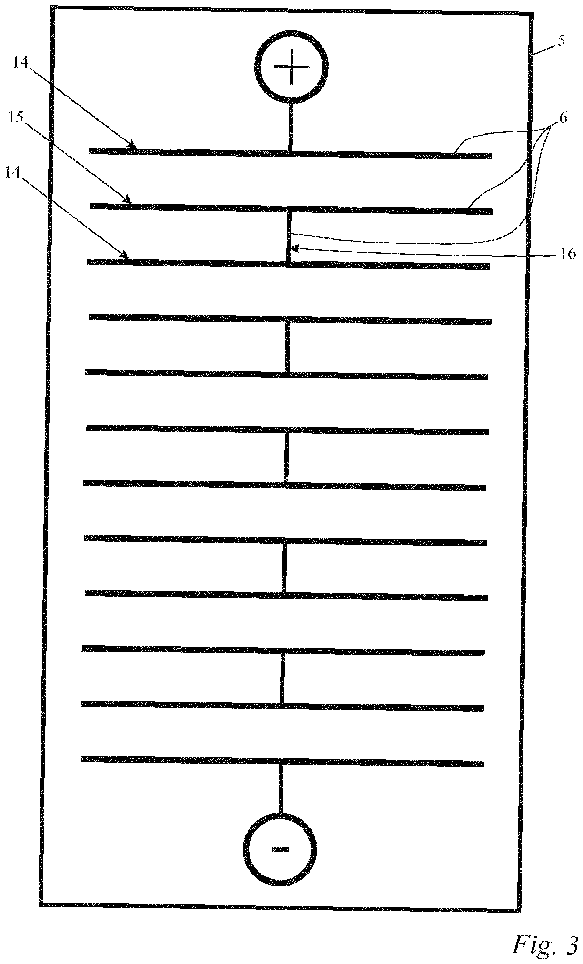

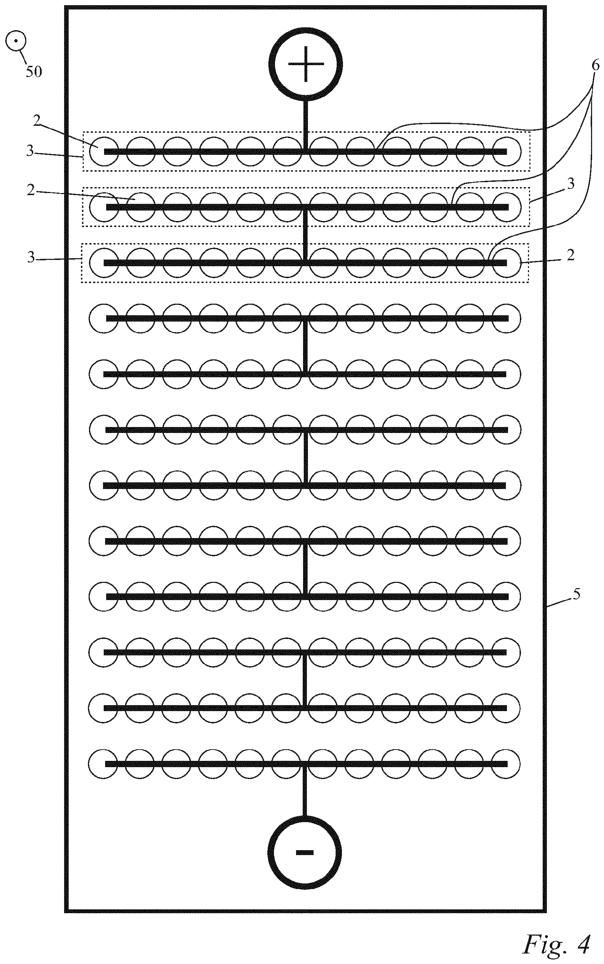

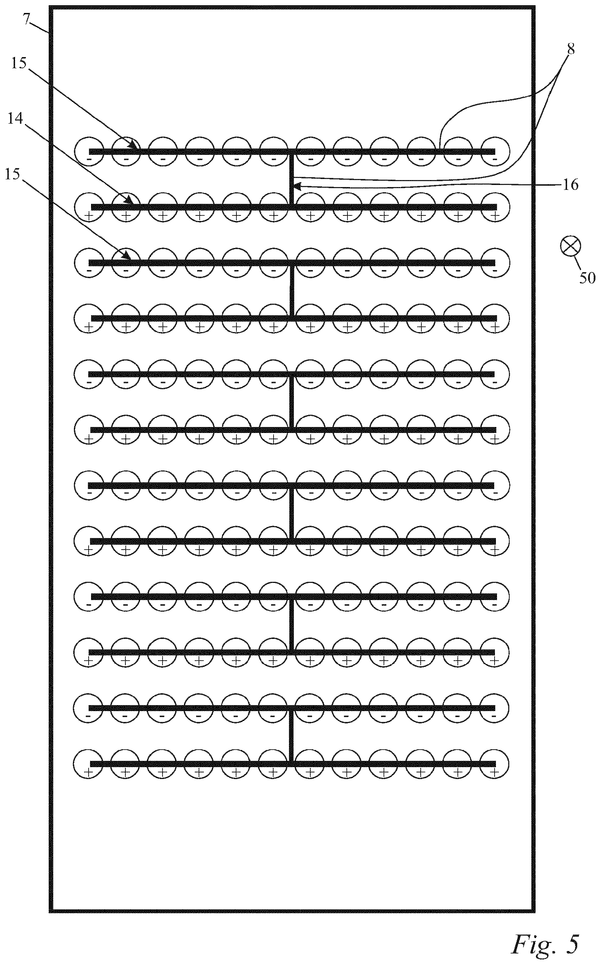

Die Verschaltung der Batteriezellen 2 miteinander erfolgt im Ausführungsbeispiel über in Fig. 3 dargestellte Kontaktbahnen 6 und über in Fig. 5 dargestellte weitere Kontaktbahnen 8. Die Kontaktbahnen 6 sind auf einem Kontaktträger 5 angeordnet. Die weiteren Kontaktbahnen 8 sind auf einem weiteren Kontaktträger 7 angeordnet. Es kann aber auch vorgesehen sein, dass die Kontaktbahnen 6 und 8 lediglich an den Batteriezellen 2 befestigt sind. Eine Anordnung auf einem Kontaktträger ist nicht unbedingt erforderlich. In den Ausführungsbeispielen sind die Batteriezellen 2 zwischen dem Kontaktträger 5 und dem weiteren Kontaktträger 7 angeordnet. Fig. 4 zeigt schematisch die Anordnung des Kontaktträgers 5 auf einer Oberseite der Batteriezellen 2. Fig. 5 zeigt schematisch die Anordnung des weiteren Kontaktträgers 7 auf einer Unterseite der Batteriezellen 2. Die elektrischen Pole sind in Fig. 5 aus Gründen der besseren Darstellbarkeit außermittig bezüglich der als Rundzellen ausgebildeten Batteriezellen 2 eingezeichnet. Die Pluspole sind mit "+" und die Minuspole mit "-" gekennzeichnet. In Fig. 2 sind die Batteriezellen 2 mit Blick auf die Oberseite des Batteriemoduls 1 dargestellt. In Fig. 5 sind die Batteriezellen 2 mit Blick auf die Unterseite des Batteriemoduls 1 dargestellt. Die in der ersten, obersten Reihe dargestellten Batteriezellen 2 sind dieselben, die in Fig. 5 ebenfalls in der ersten, obersten Reihe dargestellt sind. Die in Fig. 2 ganz links oben dargestellte Batteriezelle 2 ist in Fig. 5 ganz rechts oben dargestellt. Fig. 2 zeigt den Blick auf den Pluspol dieser Batteriezelle 2. Fig. 5 zeigt den Blick auf den Minuspol dieser Batteriezelle 2.

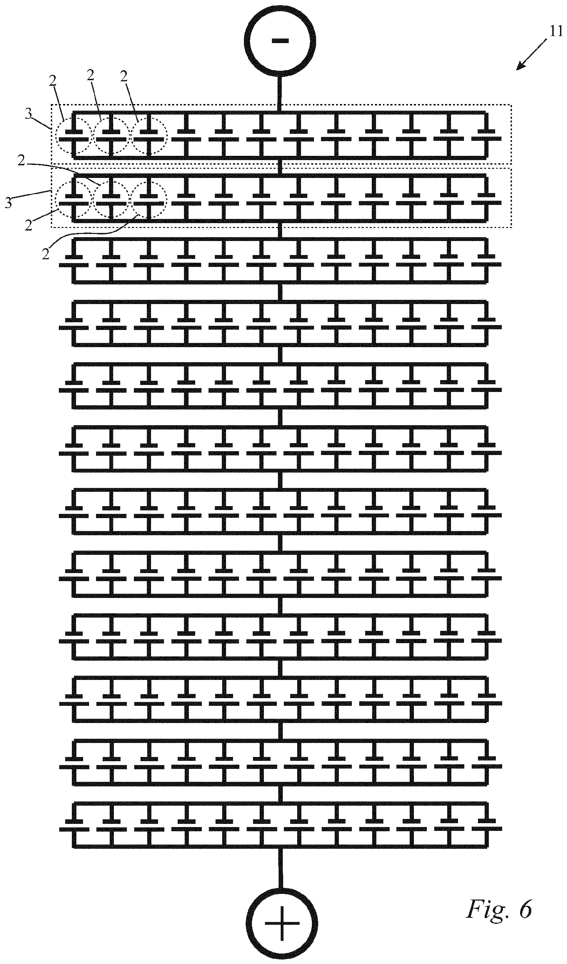

Durch die Kontaktbahnen 6 und die weiteren Kontaktbahnen 8 ist eine in Fig. 6 schematisch dargestellte Verschaltung 11 der Batteriezellen 2 realisiert.

Die Verschaltungen der Batteriezellen 2 sind so ausgeführt, dass jede Batteriezelle 2 einer Gruppe 3 zugeordnet ist (Fig. 4). Jede Gruppe 3 enthält gleich viele Batteriezellen 2. Die Batteriezellen 2 einer Gruppe 3 sind parallel geschaltet. Die Gruppen 3 sind in Reihe geschaltet. Eine Gruppe 3 wird auch als Bündel an Batteriezellen 2 bezeichnet. Die gleichnamigen elektrischen Pole der Batteriezellen 2 derselben Gruppe 3 sind elektrisch auf demselben Potenzial. Die Einzelstromstärken der Batteriezellen 2 der gleichen Gruppe 3 bilden eine Gruppenstromstärke. Die Gruppenstromstärke entspricht der Summe der Einzelstromstärken der Batteriezellen 2 der gleichen Gruppe 3. Die Gruppenstromstärken aller Gruppen 3 sind gleich groß. Die Gruppenstromstärke jeder Gruppe 3 entspricht der Modulstromstärke des gesamten Batteriemoduls 1.

Die Verschaltung durch die Kontaktbahnen 6 und die weiteren Kontaktbahnen 8 nach den Figuren 3 bis 5 ist so ausgeführt, dass zwölf Batteriezellen 2 in einer Gruppe 3 angeordnet sind. Die Batteriezellen 2 sind in insgesamt zwölf Gruppen 3 eingeteilt. Die zwölf Batteriezellen 2 einer Gruppe 3 sind parallel geschaltet. Die Pluspole der Batteriezellen 2 der gleichen Gruppe 3 sind durch die Verschaltung auf demselben elektrischen Potenzial. Die Minuspole der Batteriezellen 2 der gleichen Gruppe 3 sind durch die Verschaltung auf demselben elektrischen Potenzial. Die zwölf Gruppen 3 sind in Reihe geschaltet.

Das Batteriemodul 1 umfasst insgesamt genau 144 miteinander verschaltete Batteriezellen 2. In den Ausführungsbeispielen sind alle Batteriezellen 2 des Batteriemoduls 1 miteinander verschaltet. Es sind keine Batteriezellen vorgesehen, die nicht zur Ausgangsleistung des Batteriemoduls 1 beitragen.

In Fig. 2 ist eine Polrichtung 50 eingezeichnet. Die Polrichtung 50 verläuft von der Unterseite der Batteriezellen 2 in Richtung auf die Oberseite der Batteriezellen 2. Die Polrichtung 50 verläuft von der Unterseite des Batteriemoduls 1 in Richtung auf die Oberseite des Batteriemoduls 1. In Fig. 2 sind die elektrischen Pluspole der Batteriezellen 2 mit "+" gekennzeichnet. Die elektrischen Minuspole der Batteriezellen 2 sind mit "-" gekennzeichnet. Im Ausführungsbeispiel nach Fig. 2 zeigen die Pluspole der Batteriezellen 2 der Reihen eins, drei, fünf, sieben, neun und elf in Polrichtung. Die Nummerierung der Reihen erfolgt in Fig. 2 von oben nach unten. Die 144 Batteriezellen sind in zwölf Reihen und in zwölf Spalten angeordnet. Die Pluspole der Batteriezellen 2 der Reihen zwei, vier, sechs, acht, zehn und zwölf zeigen in Richtung entgegen der Polrichtung 50. Dementsprechend zeigen die Minuspole der Batteriezellen 2 der Reihen eins, drei, fünf, sieben, neun und elf in Richtung entgegen der Polrichtung. Die Minuspole der Batteriezellen 2 der Reihen zwei, vier, sechs, acht, zehn und zwölf zeigen in Polrichtung. Die Pluspole von 72 Batteriezellen 2 weisen in die Polrichtung 50. Die Pluspole der anderen 72 Batteriezellen 2 weisen in Richtung entgegen der Polrichtung 50. Es kann aber auch vorgesehen sein, dass die Pluspole aller 144 Batteriezellen 2 in dieselbe Richtung weisen, beispielsweise in Polrichtung 50. Bei dieser Ausgestaltung können dann die Minuspole aller 144 Batteriezellen entgegen der Polrichtung 50 oder ebenfalls in Polrichtung 50 weisen.

Wie die Figuren 4 und 5 zeigen, sind die Batteriezellen 2 einer Gruppe 3 elektrisch parallel geschaltet. Die Pluspole der Batteriezellen 2 einer Gruppe 3 sind elektrisch miteinander verbunden. Die Minuspole der Batteriezellen 2 einer Gruppe 3 sind elektrisch miteinander verbunden. Die einzelnen Gruppen 3 sind über die Kontaktbahnen 6 und die weiteren Kontaktbahnen 8 elektrisch in Reihe geschaltet. Im Ausführungsbeispiel nach den Figuren 4 und 5 sind die Minuspole der Batteriezellen 2 der ersten Reihe mit den Pluspolen der Batteriezellen 2 der zweiten Reihe verbunden. Die Minuspole der Batteriezellen 2 der zweiten Reihe sind mit den Pluspolen der Batteriezellen 2 der dritten Reihe elektrisch verbunden. Diese Verschaltung ist so fortgeführt. Die Pluspole der Batteriezellen 2 der elften Reihe sind mit den Minuspolen der Batteriezellen 2 der zwölften Reihe verbunden.

Durch die wechselseitige Anordnung der elektrischen Pole der Batteriezellen 2 benachbarter Reihen können die Kontaktbahnen 6 und die weiteren Kontaktbahnen 8 jeweils in einer Ebene verlaufen. Es ist nicht erforderlich, dass elektrische Pole der Batteriezellen 2 durch elektrische Verbindungen in Richtung der Polrichtung 50 verbunden werden. Die elektrische Verbindung der elektrischen Pole in Polrichtung 50 findet in den Ausführungsbeispielen durch die Batteriezellen 2 selbst statt. Bei anderer Anordnung der Pole der Batteriezellen kann aber auch vorgesehen sein, dass die Verschaltung der Batteriezellen 2 auch durch Verbindungsleitungen erfolgt, die in Polrichtung 50 entlang der Batteriezellen 2 verlaufen.

Das Batteriemodul 1 liefert in Abhängigkeit der Verschaltung unterschiedliche Ausgangsspannungswerte. Insgesamt sind genau 15 verschiedene Verschaltungen der 144 Batteriezellen 2 zu in Reihe geschalteten Gruppen 3 möglich. Durch die verschiedenen Verschaltungen können insgesamt genau 15 verschiedene Ausgangsspannungen erzeugt werden. In den Ausführungsbeispielen nach den Figuren 3 bis 8 sind drei der insgesamt 15 verschiedenen Verschaltungsmöglichkeiten dargestellt.

Bei der Verschaltung 11 nach den Figuren 3 bis 6 sind zwölf Gruppen 3 mit jeweils zwölf Batteriezellen 2 in Reihe geschaltet.

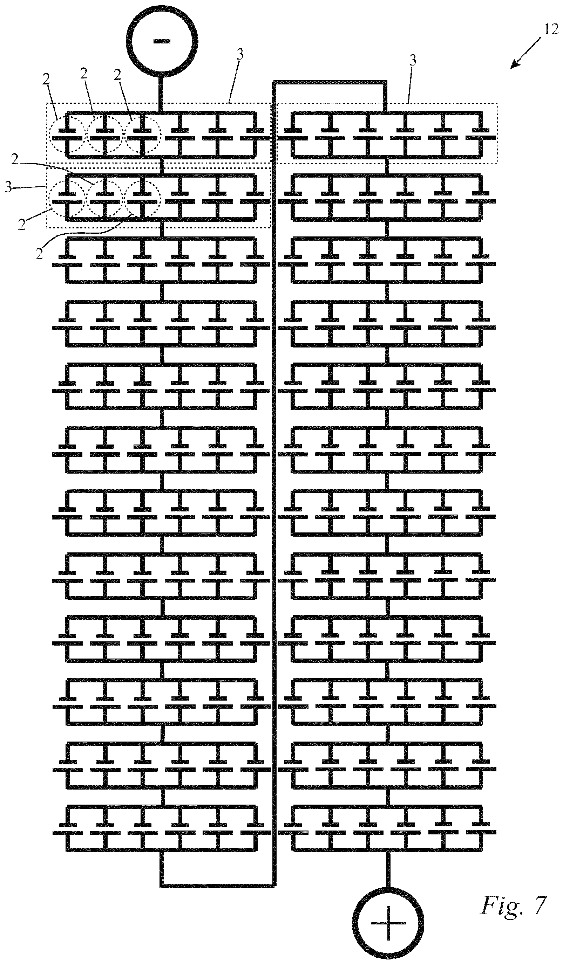

Fig. 7 zeigt eine Verschaltung 12, bei der 24 Gruppen 3 mit jeweils sechs Batteriezellen 2 in Reihe geschaltet sind. Jede Gruppe 3 umfasst sechs Batteriezellen 2. Durch die Verschaltung 12 wird eine doppelt so hohe Ausgangsspannung des Batteriemoduls 1 wie durch die Verschaltungen 11 erreicht. Die Stromstärke des Batteriemoduls 1 mit der Verschaltung 11 ist doppelt so hoch wie die Stromstärke des Batteriemoduls 1 mit der Verschaltung 12.

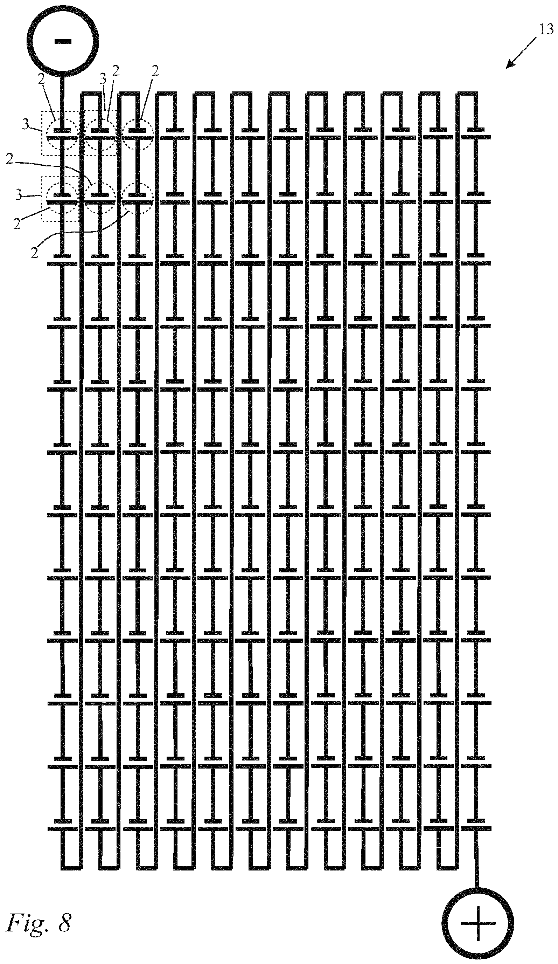

Fig. 8 zeigt eine Verschaltung 13, bei der alle Batteriezellen 2 in Reihe geschaltet sind. Jede Gruppe 3 umfasst jeweils nur eine Batteriezelle 2. Die Verschaltung 13 teilt die 144 Batteriezellen 2 in 144 Gruppen 3 ein. Durch die Verschaltungen 13 wird der höchstmögliche Ausgangsspannungswert des Batteriemoduls 1 erzielt. Die Stromstärke ist minimal.

Unabhängig von den verschiedenen Verschaltungen 11, 12, 13 sind die Batteriezellen 2 räumlich unverändert in dem Batteriezellenträger 4 angeordnet (Fig. 1). Bei allen 15 Möglichkeiten für die verschiedenen Verschaltungen bleibt die räumliche Anordnung der Batteriezellen 2 gleich. Die Verschaltung der Batteriezellen 2 ist so ausführbar, dass der Ausgangsspannungswert vom Einfachen bis zum 144fachen des Spannungsmittelwerts aller Batteriezellen 2 beträgt. In den Ausführungsbeispielen beträgt der Ausgangsspannungswert von 2 V bis 720 V, insbesondere von 3 V bis 576 V.

Der Ausgangsspannungswert des Batteriemoduls 1 entspricht dem Produkt aus dem Spannungsmittelwert aller Batteriezellen 2 und der Zahl 1, 2, 3, 4, 6, 8, 9, 12, 16, 18, 24, 36, 48, 72 oder 144. Im Ausführungsbeispiel nach den Figuren 3 bis 6 entspricht der Ausgangsspannungswert dem Produkt aus dem Spannungsmittelwert aller Batteriezellen 2 und der Zahl 12. Im Ausführungsbeispiel nach Fig. 7 entspricht der Ausgangsspannungswert dem Produkt aus dem Spannungsmittelwert aller Batteriezellen 2 und der Zahl 24. Im Ausführungsbeispiel nach Fig. 8 entspricht der Ausgangsspannungswert dem Produkt aus dem Spannungsmittelwert aller Batteriezellen 2 und der Zahl 144.

Eine Gruppe 3 umfasst eine Batterieanzahl an Batteriezellen 2. Die Batterieanzahl beträgt 1, 2, 3, 4, 6, 8, 9, 12, 16, 18, 24, 36, 48, 72 oder 144. Jede Gruppe 3 eines Batteriemoduls 1 enthält dieselbe Batterieanzahl an Batteriezellen 2. Im Ausführungsbeispiel nach den Figuren 3 bis 6 beträgt die Batterieanzahl zwölf. Im Ausführungsbeispiel nach Fig. 7 beträgt die Batterieanzahl sechs. Im Ausführungsbeispiel nach Fig. 8 beträgt die Batterieanzahl eins.

Die miteinander verschalteten Batteriezellen 2 sind in genau eine Gruppenanzahl an Gruppen 3 eingeteilt. Die Gruppenanzahl beträgt 1, 2, 3, 4, 6, 8, 9, 12, 16, 18, 24, 36, 48, 72 oder 144. Im Ausführungsbeispiel nach den Figuren 3 bis 6 beträgt die Gruppenanzahl zwölf. Im Ausführungsbeispiel nach Fig. 7 beträgt die Gruppenanzahl 24. Im Ausführungsbeispiel nach Fig. 8 beträgt die Gruppenanzahl 144.

Die Batteriezellen 2 des Batteriemoduls 1 können so verschaltet sein, dass die Gruppenanzahl 1 und die Batterieanzahl 144 beträgt. Die Batteriezellen 2 des Batteriemoduls 1 können so verschaltet sein, dass die Gruppenanzahl 2 und die Batterieanzahl 72 beträgt. Die Batteriezellen 2 des Batteriemoduls 1 können so verschaltet sein, dass die Gruppenanzahl 3 und die Batterieanzahl 48 beträgt. Die Batteriezellen 2 des Batteriemoduls 1 können so verschaltet sein, dass die Gruppenanzahl 4 und die Batterieanzahl 36 beträgt. Die Batteriezellen 2 des Batteriemoduls 1 können so verschaltet sein, dass die Gruppenanzahl 6 und die Batterieanzahl 24 beträgt. Die Batteriezellen 2 des Batteriemoduls 1 können so verschaltet sein, dass die Gruppenanzahl 8 und die Batterieanzahl 18 beträgt. Die Batteriezellen 2 des Batteriemoduls 1 können so verschaltet sein, dass die Gruppenanzahl 9 und die Batterieanzahl 16 beträgt. Die Batteriezellen 2 des Batteriemoduls 1 können so verschaltet sein, dass die Gruppenanzahl 12 und die Batterieanzahl 12 beträgt. Die Batteriezellen 2 des Batteriemoduls 1 können so verschaltet sein, dass die Gruppenanzahl 16 und die Batterieanzahl 9 beträgt. Die Batteriezellen 2 des Batteriemoduls 1 können so verschaltet sein, dass die Gruppenanzahl 18 und die Batterieanzahl 8 beträgt. Die Batteriezellen 2 des Batteriemoduls 1 können so verschaltet sein, dass die Gruppenanzahl 24 und die Batterieanzahl 6 beträgt. Die Batteriezellen 2 des Batteriemoduls 1 können so verschaltet sein, dass die Gruppenanzahl 36 und die Batterieanzahl 4 beträgt. Die Batteriezellen 2 des Batteriemoduls 1 können so verschaltet sein, dass die Gruppenanzahl 48 und die Batterieanzahl 3 beträgt. Die Batteriezellen 2 des Batteriemoduls 1 können so verschaltet sein, dass die Gruppenanzahl 72 und die Batterieanzahl 2 beträgt. Die Batteriezellen 2 des Batteriemoduls 1 können so verschaltet sein, dass die Gruppenanzahl 144 und die Batterieanzahl 1 beträgt.

Die Gruppenanzahl ist proportional zu dem Ausgangsspannungswert des Batteriemoduls 1.

Die Batterieanzahl an Batteriezellen 2 in einer Gruppe 3 ist proportional zu der Gruppenstromstärke dieser Gruppe 3. Die Batterieanzahl ist proportional zu der Modulstromstärke des Batteriemoduls 1.

Das Produkt aus Batterieanzahl und Gruppenanzahl ergibt 144. Dies gilt für alle 15 Verschaltungsmöglichkeiten.

Bei dem Verfahren zur Herstellung des Batteriemoduls 1 werden die Batteriezellen 2 derart elektrisch miteinander verschaltet, dass jede Batteriezelle 2 einer Gruppe 3 zugeordnet ist. Jede Gruppe 3 enthält gleich viele Batteriezellen 2. Die Batteriezellen 2 einer Gruppe 3 werden elektrisch parallel miteinander geschaltet. Die Gruppen 3 werden elektrisch in Reihe geschaltet. Insgesamt werden 144 Batteriezellen 2 miteinander verschaltet. Insgesamt werden genau 144 Batteriezellen 2 miteinander verschaltet. Das Batteriemodul 1 umfasst genau 144 Batteriezellen 2.

Bei räumlich unveränderter Anordnung der Batteriezellen 2 sind durch unterschiedliche Verschaltung 11, 12, 13 (Figuren 6 bis 8) der Batteriezellen 2 miteinander verschiedene Ausgangsspannungswerte des Batteriemoduls 1 erzeugbar.

Die Verschaltung erfolgt durch die elektrische Verbindung der Pluspole der Batteriezellen 2 derselben Gruppe 3 mit jeweils einem Plus-Busbar 14 (Fig. 3, Fig. 5) über Drähte. In den Figuren 3 und 5 sind diese Drähte nicht dargestellt. Es kann auch vorgesehen sein, dass der Plus-Busbar 14 die Pluspole der Batteriezellen 2 unmittelbar kontaktiert. Drähte zur Verbindung der Batteriezellen 2 mit den Plus-Busbars sind dann nicht erforderlich. Die Minuspole der Batteriezellen 2 derselben Gruppe 3 werden mit jeweils einem Minus-Busbar 15 mit Hilfe von Drähten verbunden. Diese Drähte sind in Fig. 3 nicht dargestellt. Es kann auch vorgesehen sein, dass der Minus-Busbar 15 die Minuspole der Batteriezellen 2 unmittelbar kontaktiert. Drähte zur Verbindung der Batteriezellen 2 mit den Minus-Busbars sind dann nicht erforderlich. Die verschiedenen Gruppen 3 werden durch elektrische Verbindung der Minus-Busbars 15 und der Plus-Busbars 14 über Drähte 16 in Reihe geschaltet. Hierbei wird jeweils nur ein Minus-Busbar 15 mit nur einem Plus-Busbar 14 verbunden. Die Verbindungen zwischen Batteriezellen 2, Drähten, Minus-Busbars 15 und Plus-Busbars 14 werden gelötet. Die Anzahl der Plus-Busbars 14 und die Anzahl der Minus-Busbars 15 entsprechen jeweils der Gruppenanzahl an Gruppen 3. Die Minus-Busbars 15, die Plus-Busbars 14 und alle Drähte sind in den Figuren 4 und 5 schematisch als Kontaktbahnen 6 und 8 dargestellt. Die Minus-Busbars 15 und die Plus-Busbars 14 sind Teil der Kontaktbahnen 6 oder der Kontaktbahnen 8. Die Drähte 16 sind Teil der Kontaktbahnen 6 oder 8. In den Ausführungsbeispielen sind die Kontaktbahnen 6 zumindest teilweise auf dem Kontaktträger 5 angeordnet. Die weiteren Kontaktbahnen 8 sind zumindest teilweise auf dem weiteren Kontaktträger 7 angeordnet. Es kann aber auch vorgesehen sein, dass die Kontaktbahnen ausschließlich an den Batteriezellen 2 befestigt sind. Kontaktträger sind dann überflüssig. In den Ausführungsbeispielen sind auf dem Kontaktträger 5 Minus-Busbars und Plus-Busbars angeordnet. In den Ausführungsbeispielen sind auf dem weiteren Kontaktträger 7 Minus-Busbars und Plus-Busbars angeordnet.

Durch die Herstellung des Batteriemoduls 1 mit dem beschriebenen Verfahren können basierend auf einem einzigen Batterieträger 4 Batteriemodule 1 mit 15 verschiedenen Ausgangsspannungen hergestellt werden. Die Herstellung des Batterieträgers 4 ist dabei immer gleich. Seine Form bleibt unabhängig von der Ausgangsspannung unverändert. Die physikalische Anordnung der Batteriezellen 2 in dem Batterieträger 4 bleibt unverändert. Lediglich die Verschaltung der Batteriezellen 2 wird verschieden ausgeführt.

## Patentansprüche

1. Batteriemodul mit einer Mehrzahl von Batteriezellen (2), wobei jede Batteriezelle (2) einen Einzelspannungswert aufweist, wobei das Batteriemodul (1) einen Ausgangsspannungswert aufweist, wobei eine Verschaltung (11, 12, 13) der Batteriezellen (2) so ausgeführt ist, dass jede Batteriezelle (2) einer Gruppe (3) zugeordnet ist, wobei jede Gruppe (3) gleich viele Batteriezellen (2) enthält, wobei die Batteriezellen (2) einer Gruppe (3) parallel geschaltet sind, wobei die Gruppen (3) in Reihe geschaltet sind, wobei verschiedene Verschaltungen (11, 12, 13) zu in Reihe geschalteten Gruppen (3) möglich sind,
**dadurch gekennzeichnet, dass** das Batteriemodul (1) insgesamt genau 144 miteinander verschaltete Batteriezellen (2) umfasst.

2. Batteriemodul nach Anspruch 1,
**dadurch gekennzeichnet, dass** das Batteriemodul (1) in Abhängigkeit der Verschaltung (11, 12, 13) unterschiedliche Ausgangsspannungswerte liefert.

3. Batteriemodul nach Anspruch 1 oder 2,
**dadurch gekennzeichnet, dass** insgesamt genau 15 verschiedene Verschaltungen (11, 12, 13) der 144 Batteriezellen (2) zu in Reihe geschalteten Gruppen (3) möglich sind.

4. Batteriemodul nach einem der Ansprüche 1 bis 3,
**dadurch gekennzeichnet, dass** sämtliche miteinander verschaltete Batteriezellen (2) des Batteriemoduls (1) baugleich sind.

5. Batteriemodul nach einem der Ansprüche 1 bis 4,
**dadurch gekennzeichnet, dass** die Einzelspannungswerte sämtlicher miteinander verschalteter Batteriezellen (2) des Batteriemoduls (1) jeweils weniger als 10%, insbesondere weniger als 5% von einem Spannungsmittelwert aller Batteriezellen (2) abweichen.

6. Batteriemodul nach einem der Ansprüche 1 bis 5,
**dadurch gekennzeichnet, dass** die Verschaltung (11, 12, 13) der Batteriezellen (2) so ausführbar ist, dass der Ausgangsspannungswert vom Einfachen bis zum 144fachen des Spannungsmittelwerts aller Batteriezellen beträgt.

7. Batteriemodul nach einem der Ansprüche 1 bis 6,
**dadurch gekennzeichnet, dass** der Ausgangsspannungswert dem Produkt aus dem Spannungsmittelwert aller Batteriezellen (2) und 1, 2, 3, 4, 6, 8, 9, 12, 16, 18, 24, 36, 48, 72 oder 144 entspricht.

8. Batteriemodul nach einem der Ansprüche 1 bis 7,
**dadurch gekennzeichnet, dass** eine Gruppe (3) genau eine Batterieanzahl an Batteriezellen (2) umfasst, und dass die Batterieanzahl 1, 2, 3, 4, 6, 8, 9, 12, 16, 18, 24, 36, 48, 72 oder 144 beträgt.

9. Batteriemodul nach einem der Ansprüche 1 bis 8,
**dadurch gekennzeichnet, dass** die miteinander verschalteten Batteriezellen (2) in genau eine Gruppenanzahl an Gruppen (3) eingeteilt sind, und dass die Gruppenanzahl 1, 2, 3, 4, 6, 8, 9, 12, 16, 18, 24, 36, 48, 72 oder 144 beträgt.

10. Batteriemodul nach den Ansprüchen 8 und 9,
**dadurch gekennzeichnet, dass** das Produkt aus Batterieanzahl und Gruppenanzahl 144 ergibt.

11. Batteriemodul nach einem der Ansprüche 1 bis 10,
**dadurch gekennzeichnet, dass** insgesamt durch die verschiedenen Verschaltungen (11, 12, 13) genau 15 verschiedene Ausgangsspannungen erzeugt werden können.

12. Batteriemodul nach einem der Ansprüche 1 bis 11,
**dadurch gekennzeichnet, dass** das Batteriemodul (1) einen Batteriezellenträger (4) aufweist, und dass die Batteriezellen (2) unabhängig von den verschiedenen Verschaltungen (11, 12, 13) räumlich unverändert in dem Batteriezellenträger (4) angeordnet sind.

13. Batteriemodul nach einem der Ansprüche 1 bis 12,
**dadurch gekennzeichnet, dass** das Batteriemodul (1) Kontaktbahnen (6, 8) aufweist, und dass die Verschaltung (11, 12, 13) der Batteriezellen (2) über die Kontaktbahnen (6, 8) realisiert ist.

14. Verfahren zur Herstellung eines Batteriemoduls (1), wobei das Batteriemodul (1) eine Mehrzahl von Batteriezellen (2) aufweist, wobei jede Batteriezelle (2) einen Einzelspannungswert aufweist, wobei das Batteriemodul (1) einen Ausgangsspannungswert aufweist, wobei die Batteriezellen (2) derart elektrisch miteinander verschaltet werden, dass jede Batteriezelle (2) einer Gruppe (3) zugeordnet ist, wobei jede Gruppe (3) gleich viele Batteriezellen (2) enthält, wobei die Batteriezellen (2) einer Gruppe (3) parallel geschaltet sind und wobei die Gruppen (3) in Reihe geschaltet sind,
**dadurch gekennzeichnet, dass** das Batteriemodul (1) insgesamt genau 144 miteinander verschaltbare Batteriezellen (2) umfasst.

15. Verfahren nach Anspruch 14,
**dadurch gekennzeichnet, dass** bei räumlich unveränderter Anordnung der Batteriezellen (2) durch unterschiedliche Verschaltung (11, 12, 13) der Batteriezellen (2) miteinander verschiedene Ausgangsspannungswerte des Batteriemoduls (1) erzeugbar sind.
